**Europäisches Patentamt**

**European Patent Office**

**Office européen des brevets**

(11) Publication number: **0 122 734**
**B1**

## EUROPEAN PATENT SPECIFICATION

(45) Date of publication of patent specification: **15.07.87**

(51) Int. Cl.⁴: **B 60 P 3/08,** B 61 D 3/18

(21) Application number: **84301860.7**

(22) Date of filing: **20.03.84**

(54) **Device for vertically reaching the lower platform of an automobile carrier.**

(30) Priority: **21.03.83 ES 271017 u**

(43) Date of publication of application:
**24.10.84 Bulletin 84/43**

(45) Publication of the grant of the patent:
**15.07.87 Bulletin 87/29**

(84) Designated Contracting States:
**AT BE CH DE FR GB IT LI LU NL SE**

(56) References cited:
**DE-B-1 215 740**
**US-A-2 062 120**
**US-A-2 730 400**

(73) Proprietor: **Pardo Gonzalez, Julio**
**Industrial Sanchez Barcaiztegui, 40 -2 F**
**Madrid - 7 (ES)**

(72) Inventor: **Pardo Gonzalez, Julio**
**Industrial Sanchez Barcaiztegui, 40 -2 F**
**Madrid - 7 (ES)**

(74) Representative: **White, Malcolm Frank et al**
**MARKS & CLERK Alpha Tower Suffolk Street**
**Queensway**
**Birmingham B1 1TT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of the Invention

The present invention relates to a vehicle intended for use in carrying automobiles, the vehicle being of the kind having an upper platform and a lower platform which can carry the automobiles.

### Background Art

It is known to provide automobile carriers of the aforementioned kind in which the upper load-carrying platform is provided with automobile supporting tracks which are movable from an operative position to an inoperative position for the purpose of permitting access, or improving access, to the lower load-carrying platform when it is desired to load vehicles on to said lower platform or unload them therefrom. U.S. Patents US—A—2 730 400 and US—A—2 062 120 describe such constructions.

The main purpose of such automobile-carrying vehicles however is to transport by road passenger type automobiles since, due to the constitution of such vehicles they are not normally used to transport other loads. Therefore, they are frequently forced to make the return journeys empty. The object of the present invention is to provide an automobile carrier which can be used, in a very convenient way, to transport other, concentrated loads when the vehicle is not required to carry automobiles.

### Summary of Invention

In accordance with the invention there is provided a method of loading an automobile carrier of the kind having an upper load-carrying platform and a lower load-carrying platform in which said upper load-carrying platform is provided with one or more windows or openings characterised in that loads other than automobiles are deposited on or removed from said lower load-carrying platform through said windows or openings in said upper load-carrying platform.

The invention is likewise applicable both to new and existing vehicles, since in the latter case a simple and easy transformation of the upper platform can be achieved.

The windows or openings provided in the upper platform are preferably rectangular and may be provided with hinged doors which, in a closed position, permit vehicles to be supported and placed on said upper platform. Alternatively, the doors may be slidably mounted on the upper platform.

### Description of Drawings

For a better understanding of this specification, reference is made to the accompanying set of drawings wherein

Figure 1 is a partial elevational view of an automobile carrier which can be used in carrying out one example in accordance with the invention.

Figure 2 is a plan view of the automobile carrier seen in Figure 1, and

Figure 3 is a cross-section view of the upper platform (drawn to a somewhat larger scale) shown in Figures 1 and 2.

### Description of One Embodiment of the Invention

Referring to the drawings, there can be seen a wheeled automobile carrier provided with a lower platform 1 and an upper platform 2. One or more openings or windows 3 are made in the upper platform 2 so that concentrated loads can be deposited on or removed from the lower platform 1 by vertical movement through said openings or windows.

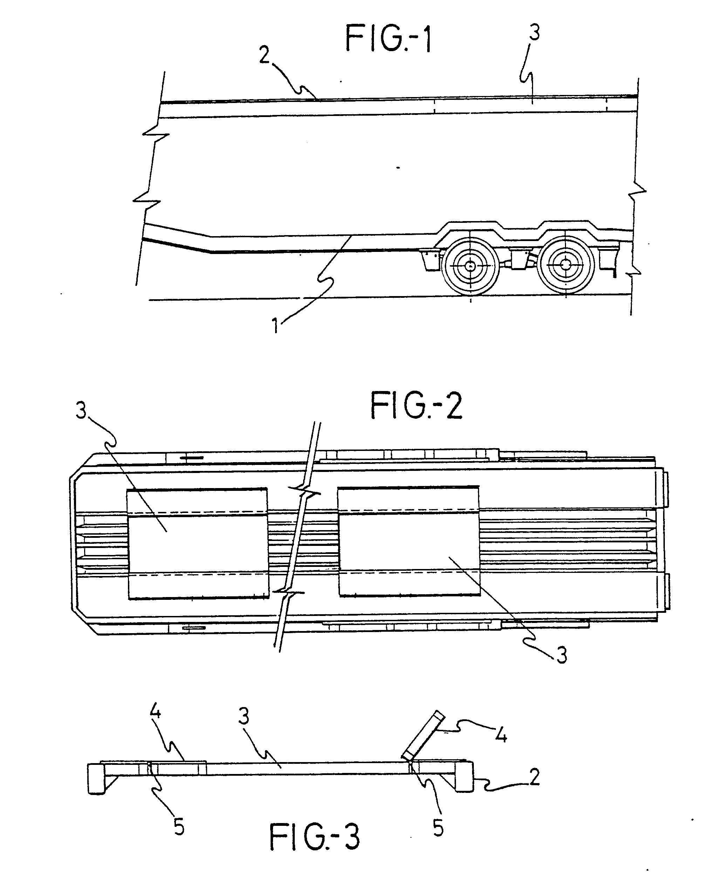

As shown in Figure 3, the windows 3 are provided with hinged doors 4 which, as shown in the figures, are articulated at their respective axis 5. These doors 4 (which, in an alternative arrangement, can be of a sliding construction), may only partially cover the surface of the windows 3 since it is not necessary for them to cover the whole area of the openings, due to the fact that when in the closed position they are only required to facilitate the distribution of the automobiles on said upper platform, and to this extent it is only necessary for the wheels of said automobiles to be supported on the longitudinally extending side margins of the upper platform.

### Claims

1. A method of loading an automobile carrier of the kind having an upper load-carrying platform (2) and a lower load-carrying platform (1) in which said upper load-carrying platform is provided with one or more windows or openings (3) characterised in that loads other than automobiles are deposited on or removed from said lower load-carrying platform (1) through said windows or openings (3) in said upper load-carrying platform (2).

2. A method as claimed in Claim 1 and wherein the or each of said windows or openings (3) is provided with a movable door characterised in that the or each door (4) is moved to an open position when it is desired to gain access to the lower load-carrying platform for the purpose of depositing loads thereon or removing loads therefrom.

3. A method as claimed in Claim 2 characterised in that the or each door (4) is moved to an open position by a pivotal movement about a respective axis (5).

4. A method as claimed in Claim 2 characterised in that the or each door (4) is moved to an open position by a sliding movement.

### Patentansprüche

1. Verfahren zum Beladen eines Automobiltransporters, mit einer oberen Plattform (2) und einer unteren Plattform (1), wobei die obere Plattform eine oder mehrere Luken bzw. Öffnungen (3) aufweist, dadurch gekennzeichnet, daß andere Lasten als Automobile durch die Luken bzw. Öff-

2

nungen (3) in der oberen Plattform (2) auf die untere Plattform (1) verbringbar oder von dieser entfernbar sind.

2. Verfahren nach Anspruch 1, dadurch gekennzeichnet, daß die bzw. jede dieser Luken oder Öffnungen (3) mit einem beweglichen Verschluß versehen ist, dadurch gekennzeichnet, daß der bzw. jeder Verschluß (4) in eine geöffnete Position bewegbar ist, wenn die untere Plattform zugänglich gemacht werden soll, um entweder Lasten auf dieser abzusetzen oder von dieser zu entfernen.

3. Verfahren nach Anspruch 2, dadurch gekennzeichnet, daß der bzw. jeder Verschluß (4) durch eine Schwenkbewegung um eine entsprechende Achse (5) in eine geöffnete Position bewegbar ist.

4. Verfahren nach Anspruch 2, dadurch gekennzeichnet, daß der bzw. jeder Verschluß (4) in eine geöffnete Position durch Verschieben bewegbar ist.

**Revendications**

1. Procédé de chargement d'un porte-voitures du type comprenant une plate-forme porte-charge supérieure (2) et une plate-forme porte-charge inférieure (1), selon lequel ladite plate-forme porte-charge supérieure est munie d'une ou plusieurs fenêtres ou ouvertures (3), caractérisé en ce que des charges, autres que des voitures, sont placées sur ou enlevées de la plate-forme porte-charge inférieure (1) par les fenêtres ou ouvertures (3) de la plate-forme porte-charge supérieure (2).

2. Procédé selon la revendication 1, et dans lequel la (ou chacune des) fenêtre ou ouverture (3) est munie d'une porte mobile, caractérisé en ce que la (ou chacune des) porte (4) est placée en position ouverte quand on le désire pour donner accès à la plate-forme porte-charge inférieure afin d'y déposer ou d'en enlever les charges.

3. Procédé selon la revendication 2, caractérisé en ce que la (ou chacune des) porte est placée en position ouverte par un mouvement pivotant autour d'un axe (5).

4. Procédé selon la revendication 2, caractérisé en ce que la (ou chacune des) porte (4) est placée en position ouverte par un mouvement coulissant.

# 0 122 734

## FIG.-1

## FIG.-2

## FIG.-3